# EUROPÄISCHE PATENTSCHRIFT

(11) **EP 1 188 693 B1**
(45) Veröffentlichungstag und Bekanntmachung des Hinweises auf die Patenterteilung: **01.02.2006**
(21) Anmeldenummer: 01121129.9
(22) Anmeldetag: 04.09.2001
(51) Int. Cl.: B65G 21/22

(54) **Kettentragelement für ein Transfersystem**
Chain support element for a transferring system
Elément de support de chaîne pour un système de transfert

(30) Priorität: 15.09.2000 DE 10045746
(43) Veröffentlichungstag der Anmeldung: 20.03.2002
(73) Patentinhaber: ROBERT BOSCH GMBH, 70442 Stuttgart (DE)
(72) Erfinder: Leisner, Ernst, 71638 Ludwigsburg (DE); Schneider, Ralph, 71336 Waiblingen (DE); Beisswaenger, Uwe, 73312 Geislingen (DE); Scholpp, Claus, Dr.-Ing., 71706 Markgröningen (DE)

(56) Entgegenhaltungen:
- EP-A- 0 409 381
- FR-A- 2 120 288
- US-A- 3 669 244

## Beschreibung

### Stand der Technik

Die Erfindung betrifft eine Streckeneinheit für ein Transfersystem nach dem Oberbegriff des Anspruchs 1, sie es allgemein bekannt ist. Ein derartiges Transfersystem weist typischerweise je eine Antriebseinheit, eine Umlenkeinheit und eine Streckeneinheit auf. Die Streckeneinheit wiederum besteht aus Aluminiumprofilen sowie Gleit- beziehungsweise Führungsprofilen aus Kunststoff. Das Aluminiumprofil hat die Funktion, die Kräfte und Momente des Transfersystems aufzunehmen und bildet die Schnittstelle zur Befestigung des Antriebs- und Umlenkgehäuses der Antriebs- und Umlenkeinheit. Die Führungs- beziehungsweise Gleitprofile werden in die Aluminiumprofile eingelegt, eingeschoben oder eingeclipst und haben die Aufgabe, das Fördermittel, beispielsweise eine Flachplattenkette oder eine Staurollenkette, zu führen und einen möglichst geringen Reibwert und geringen Verschleiß an der Schnittstelle zum Fördermittel zu realisieren. Die Gleit- beziehungsweise Führungsprofile werden entweder einzeln eingesetzt, das heißt rechts und links vom Fördermittel wird je ein einziges Profil verwendet, oder es werden große/breite Profile verwendet, welche über die komplette Breite des Fördermittels bauen. Im oberen Bereich des Aluminiumprofils kann die seitliche Führung für den Werkstückträger, das sogenannte Führungsprofil, separat ausgeführt sein oder mit dem Gleitprofil kombiniert werden. Das Fördermittel stützt sich auf den Gleitprofilen ab beziehungsweise gleitet während des Transportes über deren Oberfläche. Die Gleitbeziehungsweise Führungsprofile sind konstruktiv so ausgelegt, daß sie bei zu hohem Verschleiß einfach demontiert und getauscht werden können. Die Gleitbeziehungsweise Führungsprofile werden durch eine Klemmkraft und/oder einem Hinterschnitt oder durch eine zusätzliche Befestigung, wie zum Beispiel eine Niet, gegen Längsverschieben beziehungsweise Lösen im Aluminiumprofil gesichert.

Nachteilig bei den eingesetzten großen/breiten Profile ist, daß sie aufgrund ihrer Breite und den hohen Anforderungen an die Genauigkeit schwierig zu produzieren sind. Ihr großer Querschnitt, im Vergleich zu zwei kleinen Gleitbeziehungsweise Führungsprofilen bewirkt hohe Materialkosten und aufgrund der Anpassung auf einen bestimmten Fördermitteltyp sind sie nicht universell für verschiedene Fördermittel einsetzbar. Ein weiterer Nachteil besteht darin, daß diese Art von großen/breiten Profilen nicht beziehungsweise nur bedingt in horizontalen Bögen/Kurven eingebaut werden können, da sie nicht beziehungsweise nur bedingt in der Horizontalen gebogen werden können. Nachteilig bei den einzeln eingesetzten Gleitbeziehungsweise Führungsprofilen ist, daß sie meist nicht so ausgeführt sind, daß sie symmetrisch aufgebaut und rechts und links sowie oben und unten in das Aluminiumprofil eingesetzt werden können. Ferner ist die Form und Befestigung der Gleit- beziehungsweise Führungsprofile so ausgelegt, daß sie nur bedingt Querkräfte aufnehmen können, welche beim Einlegen der Gleit- beziehungsweise Führungsprofile in Bögen/Kurven oder durch ein Verhaken bzw. Stauchen der Gleit- bzw. Führungsprofile durch das Fördermittel auftreten können.

Aus der US 3 669 244 ist ein Förderer mit einer Konsole bekannt, die mehrere Ausnehmungen aufweist, in denen, mit einem T-förmigen Steg ausgestattete Streifen eingelegt sind. Der Steg dient der Aufnahme eines Stoßstreifens als Gleit- bzw. Führungsprofil. Die eingelegten Streifen müssen mittels Muttern gegen Herausfallen gesichert werden.

### Vorteile der Erfindung

Die erfindungsgemäße Streckeneinheit hat den Vorteil, daß ein Heraus- oder Abspringen der Gleit- bzw. Führungsprofile durch Querkräfte weder bei der Montage von langen Profilen noch beim Verklemmen des Fördermittels bzw. beim Stauchen des Gleitprofils durch die Gewichtskraft, welche durch das Fördermittel eingebracht wird oder im Bereich von Bögen/Kurven auftreten kann, verhindert wird. Dies wird erfindungsgemäß dadurch erreicht, daß am Profil wenigstens ein zusätzlicher Längssteg einstückig angeformt ist, der mit einem zusätzlichen Führungsabschnitt zusammenwirkt, welcher am Gleit- bzw. Führungsprofil angeformt ist, wobei der zusätzliche Längssteg unterhalb eines Klammerabschnitts des Gleit- bzw. Führungsprofils angeordnet ist.

Weitere Vorteile der Erfindung sind in den Unteransprüchen angegeben.

Eine besonders sichere Führung der Gleit- bzw. Führungsprofile wird ermöglicht, wenn am Gleit- bzw. Führungsprofil zwei parallel zueinander angeordnete, zusätzliche Führungsabschnitte angeformt sind, die in Wirkverbindung mit zwei zusätzlichen Längsstegen am Profil zusammenwirken. Eine derartige Ausbildung hat darüber hinaus den Vorteil, daß das Gleit- bzw. Führungsprofil symmetrisch ausgebildet ist, so daß es an einem Profil sowohl oben und unten als auch rechts und links eingesetzt werden kann.

### Zeichnung

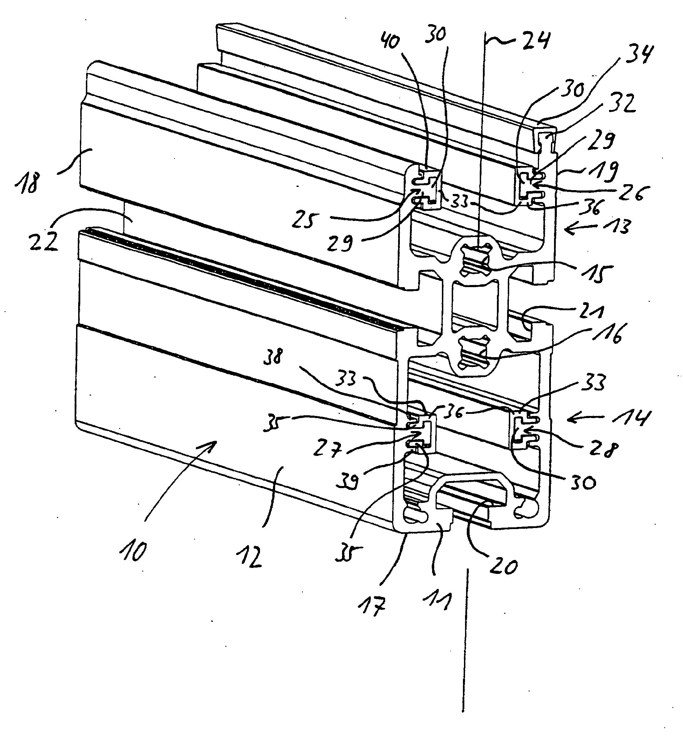

Ein Ausführungsbeispiel der Erfindung ist in der Zeichnung dargestellt und wird nachfolgend näher erläutert. Die einzige Figur zeigt einen Abschnitt einer erfindungsgemäßen Streckeneinheit in einer perspektivischen Ansicht.

### Beschreibung des Ausführungsbeispiels

In der Figur ist der Endabschnitt einer Streckeneinheit 10 gezeigt, die Bestandteil eines nicht dargestellten Transfersystems ist. An die offene Stirnseite 11 der Streckeneinheit 10 ist dazu entweder das Gehäuse einer Antriebs- oder Umlenkeinheit, oder eine weitere Streckeneinheit 10 befestigbar.

Die Streckeneinheit 10 hat ein im Strangziehverfahren hergestelltes, einen gleichmäßigen Querschnitt aufweisendes Aluminiumprofil 12. Das Aluminiumprofil 12 ist in einen oberen Bereich 13 und einen unteren Bereich 14 unterteilt. Zwischen den beiden Bereichen 13, 14 sind zwei Schraubkanäle 15, 16 ausgebildet, mittels derer die oben genannte Bauteile an die Stirnseite 11 der Streckeneinheit 10 befestigt werden können. Ferner ist an der Unterseite 17 und an den beiden Seitenflächen 18, 19 des Aluminiumprofils 12 jeweils eine hinterschnittene Nut 20, 21, 22 zur Aufnahme von Nutsteinen ausgebildet.

Symmetrisch zu einer Mittelebene 24 ist in dem oberen Bereich 13 und dem unteren Bereich 14 je ein im Querschnitt T-förmiger Steg 25, 26, 27, 28 am Aluminiumprofil 12 angeformt. Die Stege 25 bis 28 weisen alle dieselbe Größe auf, und haben je einen von der Wandung des Aluminiumprofils 12 ausgehenden horizontalen Basisabschnitt 29, und einen sich an den Basisabschnitt 29 anschließenden, vertikalen Abschlußabschnitt 30. Ferner ist an der Oberseite der einen Seitenfläche 19 des Aluminiumprofils 12 ein weiterer, T-förmiger Steg 32 angeformt. Die Stege 25 bis 28 sowie 32 dienen der Aufnahme von aus Kunststoff bestehenden, leistenförmigen Gleitprofilen 33 beziehungsweise eines Führungsprofils 34, welche bevorzugt von der Stirnseite des Aluminiumprofils 12 her auf den jeweiligen Steg 25 bis 28 beziehungsweise 32 aufgeschoben werden.

Während die Gleitprofile 33 im oberen und unteren Bereich 13, 14 als Auflage für ein nicht dargestelltes Fördermittel, wie beispielsweise eine Flachplattenkette oder eine Staurollenkette dient, bewirkt das Führungsprofil 34 eine seitliche Führung für einen ebenfalls nicht dargestellten Werkstückträger, der in Wirkverbindung mit dem im oberen Bereich 14 angeordneten Fördermittel ist.

Um eine besonders sichere Querführung der Gleitprofile 33 zu bewirken, sind sowohl das Aluminiumprofil 12, als auch das Gleitprofil 33 besonders ausgebildet. So weist das Gleitprofil 33 zwei zusätzliche Führungsabschnitte 35 auf, die sich beidseitig und in Anlage mit dem Basisabschnitt 29 befinden, und bis nahe an die inneren Seitenwände des Aluminiumprofils 12 heranreichen. Diese Führungsabschnitte 35 schließen sich dabei an den den Abschlußabschnitt 30 der Stege 25 bis 28 formschlüssig umfassenden Klammerbereich 36 der Gleitprofile 33 an. Auf der dem Basisabschnitt 29 abgewandten Seite des jeweiligen Führungsabschnitts 35 sind diese von jeweils einem Führungssteg 38, 39 umfaßt, der von der Innenwandung des Aluminiumprofils 12 ausgeht und einstückig mit diesem verbunden ist. Die Führungsstege 38, 39 verlaufen dabei etwas unterhalb der horizontalen Abschnitte 40 des Klammerbereichs 36. Durch die Ausbildung jeweils gleich großer Führungsabschnitt 35 und Führungsstege 38, 39 ist ein und dasselbe Gleitprofil 33 an allen vier Stegen 25 bis 28 verwendbar.

Treten nun Querkräfte auf das Gleitprofil 33 auf, so wird ein Aufbiegen des Gleitprofils 33 an seinem Klammerbereich 36 vermieden, da die beiden Führungsabschnitte 35 von den Führungsstegen 38, 39 gegen den Basisabschnitt 39 des jeweiligen Stegs 25 bis 28 am Aluminiumprofil 12 gedrückt werden.

Ergänzend wird erwähnt, daß beim dargestellten Ausführungsbeispiel auf Führungsabschnitte am Führungsprofil 34 und damit zusammenwirkende Führungsstege am Aluminiumprofil 12 verzichtet wurde. Selbstverständlich ist es jedoch auch möglich, das Führungsprofil 34 und das Aluminiumprofil 12 entsprechend auszubilden.

## Patentansprüche

1. Streckeneinheit (10) für ein Transfersystem, bestehend aus einem, einen gleichförmigen Längsquerschnitt aufweisenden Profil (12) zum Führen von Fördermitteln beziehungsweise Werkstückträgern, welches im Querschnitt wenigstens einen T-förmigen Steg (25 bis 28), gebildet aus einem horizontalen Basisabschnitt (29) und einem vertikalen Abschlußabschnitt (30), hat, wobei der Abschlußabschnitt (30) von einem Gleit-(33) beziehungsweise Führungsprofil (34) formschlüssig umfaßt ist, welches in Wirkverbindung mit dem Fördermittel beziehungsweise den Werkstückträgern steht,
wobei an dem Gleit- (33) beziehungsweise Führungsprofil (34) ein zusätzlicher Führungsabschnitt (35) angeformt ist, der dem Basisabschnitt (29) des T-förmigen Stegs (25 bis 28) gegenüberliegt, **dadurch gekennzeichnet, daß** an dem Profil (12) wenigstens ein zusätzlicher Längssteg (38, 39) einstückig angeformt ist, der im wesentlichen parallel zum Basisabschnitt (29) verläuft, wobei der mindestens eine Längssteg (38) unterhalb eines, den vertikalen Abschlußabschnitt (30) des Profils (12) umfassenden horizontalen Klammerabschnitts (40) des Gleit- (33) beziehungsweise Führungsprofils (34) angeordnet ist und wobei der Führungsabschnitt (35) formschlüssig zwischen dem Basisabschnitt (29) des T-förmigen Stegs (25 bis 28) und dem wenigstens einen zusätzlichen Längssteg (38, 39) des Profils (12) liegt.

2. Streckeneinheit nach Anspruch 1, **dadurch gekennzeichnet, daß** am Profil (12) beidseitig des Basisabschnitts (29) je ein zusätzlicher Längssteg (38, 39) angeformt ist und daß das Gleit- (33) beziehungsweise Führungsprofil (34) zwei parallel zueinander angeordnete, in Wirkverbindung mit den beiden zusätzlichen Längsstegen (38, 39) angeordnete Führungsabschnitte (35) aufweist.

3. Streckeneinheit nach Anspruch 1 oder 2, **dadurch gekennzeichnet, daß** die Stege (25 bis 28), die zusätzlichen Längsstege (38, 39) am Profil (12) und die Führungsabschnitte (35) am Gleitprofil (33) jeweils dieselbe Größe und Lage relativ zueinander aufweisen.

4. Streckeneinheit nach einem der Ansprüche 1 bis 3, **dadurch gekennzeichnet, daß** das Profil (12) und das Gleit- (33) beziehungsweise Führungsprofil (34) jeweils einstückig ausgebildet sind.

5. Streckeneinheit nach einem der Ansprüche 1 bis 4, **dadurch gekennzeichnet, daß** das Profil (12) aus Aluminium und das Gleit- (33) beziehungsweise Führungsprofil (34) aus Kunststoff bestehen.

## Claims

1. Track unit (10) for a transferring system, consisting of a profile (12) which has a uniform longitudinal cross section, is intended for guiding conveying means or tool carriers and has, in cross section, at least one T-shaped web (25 to 28) formed from a horizontal base section (29) and a vertical end section (30), the end section (30) being enclosed in a positive-locking manner by a sliding profile (33) or guide profile (34) which is in operative connection with the conveying means or the tool carriers, an additional guide section (35) being integrally formed on the sliding profile (33) or guide profile (34), this guide section (35) being opposite the base section (29) of the T-shaped web (25 to 28), **characterized in that** at least one additional longitudinal web (38, 39) is integrally formed in one piece on the profile (12) and runs essentially parallel to the base section (29), the at least one longitudinal web (38, 39) being arranged below a horizontal clamp section (40), enclosing the vertical end section (30) of the profile (12), of the sliding profile (33) or guide profile (34), and the guide section (35) lying in a positive-locking manner between the base section (29) of the T-shaped web (25 to 28) and the at least one additional longitudinal web (38, 39) of the profile (12).

2. Track unit according to Claim 1, **characterized in that** one additional longitudinal web (38, 39) each is integrally formed on the profile (12) on both sides of the base section (29), and **in that** the sliding profile (33) or guide profile (34) has two guide sections (35) arranged parallel to one another and arranged in operative connection with the two additional longitudinal webs (38, 39).

3. Track unit according to Claim 1 or 2, **characterized in that** the webs (25 to 28), the additional longitudinal webs (38, 39) on the profile (12) and the guide sections (35) on the sliding profile (33) in each case have the same size and position relative to one another.

4. Track unit according to one of Claims 1 to 3, **characterized in that** the profile (12) and the sliding profile (33) or guide profile (34) are in each case formed in one piece.

5. Track unit according to one of Claims 1 to 4, **characterized in that** the profile (12) is made of aluminium and the sliding profile (33) or guide profile (34) is made of plastic.

## Revendications

1. Glissière (10) pour un système de transfert composée d'un profil (12) présentant une section longitudinale uniforme pour guider des moyens de transport ou des supports de pièces, qui présente dans sa section au moins une entretoise en forme de T (25 à 28), formée par un segment de base (29) horizontal un segment de fermeture (30) vertical, le segment de fermeture (30) étant entouré par complémentarité de forme d'un profil de glissement (33) ou de guidage (34) qui coopère avec les moyens de transport ou les supports de pièces, un segment de guidage (35) supplémentaire, opposé au segment de base (29) de l'entretoise en forme de T (25 à 28), étant formé sur le profil de glissement (33) ou de guidage (34),
**caractérisée en ce qu'**
au moins une entretoise longitudinale (38, 39) supplémentaire, essentiellement parallèle au segment de base (29), est formé d'une seule pièce sur le profil (12), au moins l'une des entretoises longitudinales (38) étant disposée en dessous d'un segment de mâchoire (40) horizontale du profil de glissement (33) ou de guidage (34) comprenant le segment de fermeture (30) vertical du profil (12), et la section de guidage (35) étant en complémentarité de forme entre le segment de base (29) de l'entretoise en forme de T (25 à 28) et au moins l'une des entretoises longitudinales (38, 39) supplémentaires du profil (12).

2. Glissière selon la revendication 1,
**caractérisée en ce qu'**
une entretoise longitudinale (38, 39) supplémentaire est formée sur le profil (12) de chacun des deux côtés du segment de base (29) et le profil de glissement (33) ou de guidage (34) présente deux parties de guidage (35) parallèles l'une à l'autre, et qui coopèrent avec les deux entretoises longitudinales (38, 39) supplémentaires.

3. Glissière selon la revendication 1 ou 2,
**caractérisée en ce que**
les entretoises (25 à 28), les entretoises longitudinales supplémentaires (38, 39) sur le profil (12), et les segments de guidage (35) sur le profil de glissement (33) présentent respectivement la même taille et la même position l'une par rapport à l'autre.

4. Glissière selon l'une des revendications 1 à 3,
**caractérisée en ce que**
le profil (12) et le profil de glissement (33) ou de guidage (34) sont formés d'une seule pièce.

5. Glissière selon l'une des revendications 1 à 4,
**caractérisée en ce que**
le profil (12) est en aluminium et le profil de glissement (33) ou de guidage (34) est en plastique.
